# FASCICULE DE BREVET EUROPEEN

(11) **EP 0 625 818 B1**
(45) Date de publication et mention de la délivrance du brevet: **05.03.1997**
(21) Numéro de dépôt: 94107689.5
(22) Date de dépôt: 16.05.1994
(51) Int. Cl.: H02K 5/14, H01R 39/38

(54) **Moteur électrique comportant un module de raccordement électrique perfectionné**
Perfektionierten elektrischen Verbindungsmodul enthaltender Elektromotor
Electric motor comprising a perfected electric-jointing module

(30) Priorité: 21.05.1993 FR 9306117
(43) Date de publication de la demande: 23.11.1994
(73) Titulaire: VALEO SYSTEMES D'ESSUYAGE, 78321 La Verrière (FR)
(72) Inventeur: Stelmarski, Pascal, F-86000 Poitiers (FR)
(74) Mandataire: Gamonal, Didier

(56) Documents cités:
- FR-A- 1 531 027
- FR-A- 2 166 002
- US-A- 4 754 184

## Description

La présente invention concerne un moteur électrique.

L'invention concerne plus particulièrement un moteur électrique à courant continu pour une unité d'entraînement d'un essuie-glace de véhicule automobile.

Un exemple de réalisation d'un tel moteur électrique intégré à une unité d'entraînement d'un essuie-glace est décrit et représenté dans le document FR-A-2.449.006 dans lequel le moteur est du type comportant un carter de moteur de forme générale cylindrique à l'intérieur duquel tourne un rotor dont l'arbre traverse une plaque porte-charbons dont chacun coopère avec un collecteur porté par l'arbre du rotor et du type comportant un module de raccordement qui comporte une structure de support de la plaque porte-charbons sur laquelle cette dernière est fixée avec interposition de dispositifs amortisseurs de vibrations.

Dans cet exemple, ainsi que dans de nombreuses conceptions de moteurs électriques, la plaque porte-charbons est reliée à la structure de support par l'intermédiaire d'une série d'amortisseurs, réalisés sous la forme de blocs amortisseurs dont chacun comporte un bloc en matériau élastomère, de forme générale cylindrique, traversé par une tige de liaison dont les extrémités opposées traversent d'une part la plaque porte-charbons et d'autre part une plaque en vis-à-vis appartenant à la structure de support et qui sont serties ou rivetées de façon à assurer la liaison.

Ce type d'assemblage nécessite donc un très grand nombre de composants et est particulièrement long et difficile à réaliser, notamment de manière automatisée.

Le document FR-A-2 166 002 décrit un autre exemple de moteur électrique dans lequel la plaque porte-charbons est fixée sur un flasque-palier du moteur au moyen de blocs amortisseurs en matière élastique. Les blocs amortisseurs comportent deux rainures, la première des rainures recevant le bord périphérique de la plaque porte-charbons et la deuxième rainure recevant un bord du flasque-palier, ces éléments formant un ensemble qui est introduit dans le carter du moteur.

L'inconvénient de ce dispositif est que le montage des blocs amortisseurs sur les bords périphériques de la plaque porte-charbons et du flasque-palier est malaisé car il faut maintenir à distance ces deux derniers éléments.

La présente invention a pour but de proposer un moteur électrique dont la conception des dispositifs amortisseurs de vibrations soit simplifiée et permette de réaliser très facilement l'assemblage de la plaque porte-charbons et de la structure de support, notamment de manière automatisée.

Dans ce but, l'invention propose un moteur électrique du type mentionné précédemment, caractérisé en ce que la structure de support comporte une plaque de support dont une face est munie d'une pluralité de blocs amortisseurs dont chacun comporte une encoche dans laquelle est reçue une portion du bord périphérique de la plaque porte-charbons, la plaque de support comportant en outre au moins une portion de paroi latérale annulaire cylindrique qui s'étend axialement depuis ladite face de la plaque de support et dans laquelle est formé un logement de guidage dans lequel le bloc est guidé en coulissement radial.

Selon d'autres caractéristiques de l'invention :
- le logement est une ouverture débouchante permettant d'introduction radiale du bloc;
- l'un au moins des blocs amortisseurs est réalisé sous la forme d'une clavette de verrouillage montée coulissante sur la plaque de support, selon une direction radiale, entre une position de verrouillage dans laquelle la portion du bord périphérique de la plaque porte-charbons est reçue dans une encoche formée dans la face transversale d'extrémité de la clavette tournée radialement vers l'intérieur, et une position de mise en place de la plaque porte-charbons;
- la clavette de verrouillage est réalisée sous la forme d'un bloc en matériau amortisseur des vibrations dont ladite face transversale d'extrémité comporte une encoche débouchante qui s'étend dans un plan parallèle au plan de la plaque de support et dont la largeur est sensiblement égale à l'épaisseur de la plaque porte-charbons ;
- le bloc comporte une face inférieure qui coulisse sur ladite face de la plaque de support et une face supérieure dont le bord transversal d'extrémité qui délimite l'encoche est situé radialement en retrait vers l'extérieur par rapport au bord transversal d'extrémité correspondant de la face inférieure du bloc;
- le bloc comporte au moins une cloison d'indexation angulaire qui s'étend à l'intérieur de l'encoche et qui est reçue dans une fente radiale formée dans ladite portion du bord périphérique de la plaque porte-charbons lorsque la clavette est dans sa position de verrouillage ;
- chaque bloc amortisseur est réalisé sous la forme d'une clavette de verrouillage ;
- la structure de support comporte deux blocs amortisseurs diamétralement opposés ;
- la plaque de support comporte des éléments de raccordement électrique qui sont notamment reliés aux charbons portés par la plaque porte-charbons ;
- les éléments de raccordement électrique appartiennent à une structure métallique de raccordement fixée sur la plaque de support ;
- la structure métallique de raccordement est fixée sur la face de la plaque de support opposée à celle sur laquelle sont agencés les blocs amortisseurs.

D'autres caractéristiques et avantages de l'invention apparaîtront à la lecture de la description détaillée qui va suivre pour la compréhension de laquelle on se reportera aux dessins annexés dans lesquels :
- La figure 1 est une vue en perspective éclatée de la structure de support, des blocs amortisseurs et de la plaque porte-charbons, sur laquelle ces composants sont illustrés avant leur assemblage ;
- la figure 2 est une vue similaire à celle de la figure 1, à plus grande échelle, et sur laquelle les divers composants sont illustrés en position assemblée;
- la figure 3 est une demi-vue en section partielle par un plan axial passant par le plan médian d'un bloc amortisseur, qui illustre la première étape du processus d'assemblage de la plaque porte-charbons sur la structure de support ; et
- les figures 4 et 5 sont des vues similaires à celles de la figure 3 qui illustrent les deux étapes suivantes du processus d'assemblage.

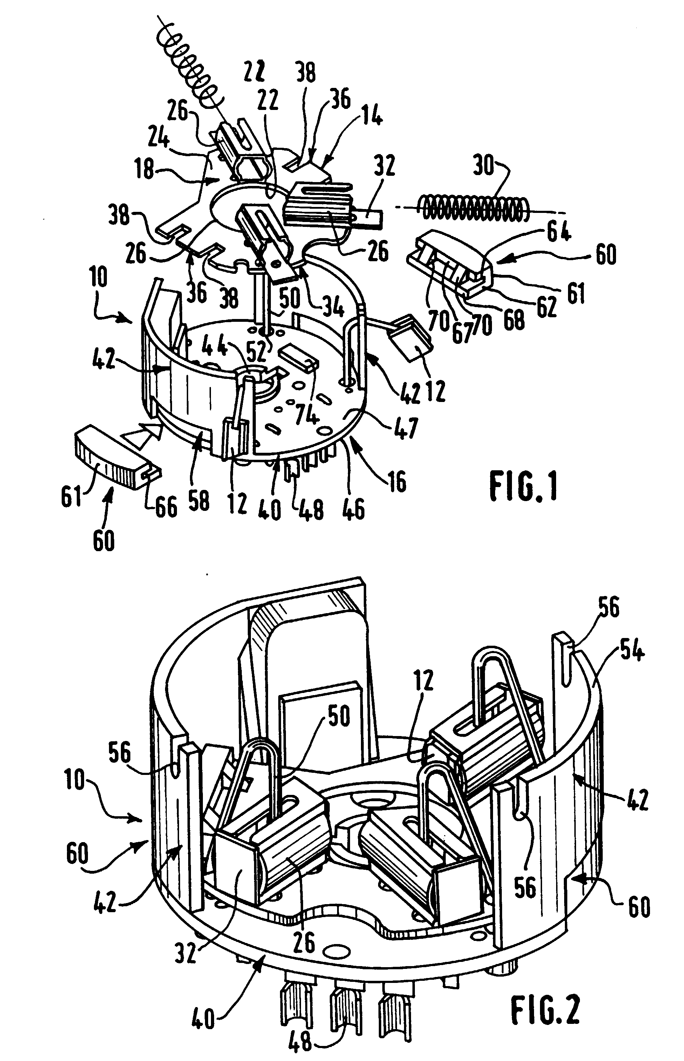

On a représenté sur les figures 1 et 2 un module électrique de raccordement 10 qui est prévu pour équiper un moteur électrique (non représenté) qui, selon une conception connue, comporte un carter de moteur, ou carcasse, dans lequel est agencé à rotation un rotor de moteur dont l'arbre porte, à l'une de ses extrémités, un collecteur électrique.

Le collecteur du moteur est prévu pour coopérer avec une série de charbons 12 appartenant au module 10.

Selon une conception connue, le module 10 est pour l'essentiel constitué par une plaque porte-charbons 14 et par une structure de support 16.

La plaque porte-charbons comporte une plaque proprement dite 18 en matériau isolant qui est percée en son centre par un trou 20 pour permettre le passage de l'arbre du rotor du moteur et qui porte sur sa face supérieure 24 trois éléments 26 de forme générale tubulaire dont chacun sert au guidage d'un charbon 12.

Chaque élément de guidage 26 est agencé radialement et reçoit également un ressort de charbon 30, dont deux sont illustrés sur la figure 1, qui sollicitent le charbon correspondant en coopération avec le collecteur du rotor en prenant appui sur une patte 32 de l'élément 26. Sur la figure 1, chaque patte 32 est illustrée dans le prolongement longitudinal de l'élément tubulaire 26, c'est-à-dire dans la position qu'elle occupe avant l'assemblage des charbons, comme cela sera expliqué par la suite.

Comme on peut le voir sur la figure 1, le bord périphérique 34 de la plaque porte-charbons 18 comporte deux portions diamétralement opposées 36 dont chacune comporte deux fentes radiales d'indexation angulaire 38.

La structure de support 16 est pour l'essentiel constituée par une plaque en forme de disque 40 réalisée par moulage en un matériau isolant et qui se prolonge par deux portions diamétralement opposées 42 d'une paroi annulaire cylindrique qui est prévue pour être reçue à l'intérieur du carter du moteur, ou à l'intérieur d'une pièce cylindrique associée au carter en prolongement de ce dernier.

La plaque 40 comporte en son centre un trou 44 pour le passage de l'extrémité de l'arbre du rotor.

Une structure métallique de raccordement électrique est fixée sur la face inférieure 46 de la plaque de support 40.

Cette structure métallique comporte différents éléments de raccordement électrique tels que des bornes 48 et trois conducteurs 50, dont chacun traverse un trou 52 formé dans la plaque 40 et porte, au voisinage de son extrémité libre, un charbon 12.

Les portions de parois latérales 42 comportent, dans leur bord axial supérieur 54, trois logements 56 dont chacun reçoit, préalablement au montage et dans la position illustrée à la figure 1, le conducteur 50 à l'extrémité duquel est articulé un charbon 12, et ceci afin de dégager l'espace interne délimité par les portions 42 de la paroi latérale annulaire cylindrique et par la plaque de support 40.

Conformément à l'invention, chacune des portions de paroi 42 comporte un trou 58, de contour sensiblement rectangulaire, qui constitue une ouverture pour l'introduction et le guidage d'un bloc amortisseur associé 65 qui constitue également une clavette pour le montage et le verrouillage en position montée de la plaque porte-balai 18 sur la plaque de support 40.

Chaque clavette 60 est réalisée sous la forme d'un bloc en matériau élastomère qui comporte une face inférieure 62 qui est prévue pour coulisser sur la face supérieure 47 de la plaque de support 40, et une face supérieure 64. Les faces inférieure 62 et supérieure 64 sont séparées par une encoche 66 qui s'étend à l'intérieur du bloc de la clavette 60, dans un plan parallèle aux faces parallèles 62 et 64, radialement de l'intérieur vers l'extérieur.

Le bord transversal 67 de la face supérieure 64 est situé radialement en retrait vers l'extérieur par rapport au bord transversal 68 de la plaque inférieure 62 comme on peut le voir clairement sur la partie de droite de la figure 1.

Chaque bloc comporte également deux cloisons d'indexation angulaire 70 dont chacune s'étend dans un plan perpendiculaire aux faces 62 et 64 et qui sont prévues pour être reçues dans les fentes d'indexation correspondantes 38 formées dans la plaque porte-charbons 18.

Le contour de chaque clavette 60 est complémentaire du contour d'une ouverture 58 de manière que chaque clavette puisse être introduite radialement depuis l'extérieur dans l'ouverture 58 et être guidée en coulissement par cette dernière.

On décrira maintenant le processus d'assemblage du module de raccordement qui vient d'être décrit.

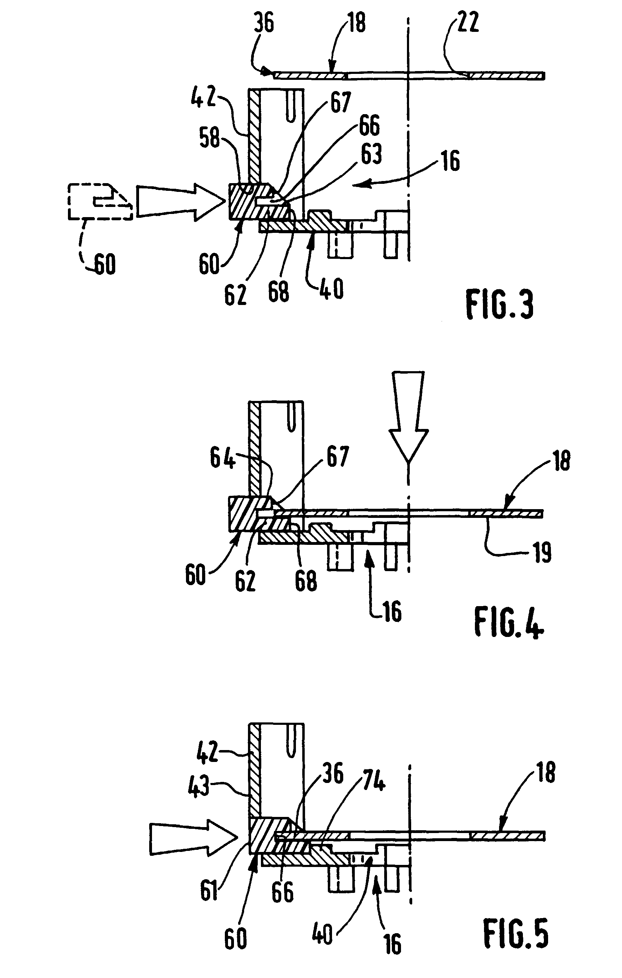

Comme cela est illustré à la figure 3, les clavettes 60 sont prépositionnées radialement, chacune à l'intérieur de l'ouverture 58 correspondante formée dans une portion de paroi latérale 42.

La plaque porte-charbons 18, qui n'est pas encore équipée des charbons 12 et des ressorts 30, est amenée au-dessus de la structure de support 16.

La mise en place de la plaque porte-charbons se poursuit en la faisant descendre axialement, selon la flèche représentée à la figure 4, jusqu'à ce que sa face inférieure 19 vienne en appui axial contre la partie 63 de la face inférieure 62 des clavettes 60.

Cette mise en place est possible du fait de l'agencement en retrait du bord 67 de la face supérieure 64 par rapport au bord 68 de la face inférieure 62 de la clavette 60.

L'indexation angulaire de la plaque 18 par rapport à la structure de support 16 est réalisée dès cet instant dans la mesure où les cloisons 70 sont reçues dans les fentes 38 de la plaque de support 18.

Comme cela est illustré à la figure 5, le verrouillage en position assemblée de la plaque de support 18 sur la structure 16 s'effectue en emboîtant radialement les clavettes 60 en les sollicitant selon la direction radiale indiquée par la flèche de la figure 5, de manière que les portions 36 du bord périphérique de la plaque porte-charbons 18 soient reçues dans les encoches 66 des clavettes 60.

La position radiale de verrouillage des clavettes 60 est déterminée par des butées 74, réalisées venues de matière, de la face supérieure 47 de la plaque de support 40.

La largeur de chacune des encoches 66 est choisie sensiblement égale, et de préférence légèrement inférieure, à l'épaisseur de la plaque porte-charbons 18 de manière que cette dernière soit légèrement serrée dans les encoches 66 afin d'éviter toute vibration intempestive de la plaque porte-charbons 18 par rapport aux blocs amortisseurs 60.

Dans la position assemblée illustrée aux figures 2 et 5, la plaque porte-charbons 18 est ainsi parfaitement immobilisée en position par rapport à la structure de support 16 par les clavettes 60 qui constituent également les amortisseurs de vibrations entre la plaque porte-charbons 18 et la structure de support 16 afin d'éviter la transmission des bruits de frottements des charbons 12 sur le collecteur du rotor à la structure de support 16 et au carter du moteur.

Comme on peut le constater aux figures 2 et 5, la portion de surface cylindrique extérieure 61 des clavettes d'amortissement 16 est parfaitement alignée avec la surface cylindrique extérieure 43 des portions de paroi annulaire cylindrique 42 de manière que l'ensemble puisse être introduit ultérieurement dans le carter du moteur, ou dans une pièce associée à ce dernier, dont la face interne cylindrique empêche tout déverrouillage accidentel des clavettes 60.

Après avoir fixé la plaque porte-charbons 18 sur la structure de support 16, l'assemblage des composants se poursuit en introduisant les charbons 12 dans les éléments tubulaires 26, puis les ressorts 30, puis en rabattant enfin à angle droit les plaques d'appui 32.

Le module 10 qui vient ainsi d'être assemblé est particulièrement simple à assembler de manière automatique, comporte un nombre réduit de composants, chaque dispositif amortisseur 60 étant réalisé sous la forme d'un organe unique en matériau élastomère et les portions de parois latérales cylindriques 42 protègent les conducteurs de raccordement 50 afin d'éviter qu'ils ne viennent toucher la carcasse métallique du carter du moteur.

La structure de support 16 moulée en matière plastique fait également fonction de support pour les bornes de raccordement 48.

Selon une variante de réalisation, non représentée, la structure de raccordement électrique peut être réalisée sous la forme d'une armature noyée lors du surmoulage de la structure de support 16.

## Revendications

1. Moteur électrique, notamment à courant continu, pour une unité d'entraînement d'un essuie-glace de véhicule automobile, du type comportant un carter de moteur de forme générale cylindrique à l'intérieur duquel tourne un rotor dont l'arbre traverse une plaque porte-charbons (18) dont chacun coopère avec un collecteur porté par l'arbre du rotor, et du type comportant un module de raccordement qui comporte une structure (16) de support de la plaque porte-charbons (18), sur laquelle cette dernière est fixée avec interposition de dispositifs amortisseurs de vibrations, caractérisé en ce que la structure de support (16) comporte une plaque de support (40) dont une face (47) est munie d'une pluralité de blocs amortisseurs (60) dont chacun comporte une encoche (66) dans laquelle est reçue une portion (36) du bord périphérique (34) de la plaque porte-charbons (18), la plaque de support (40) comportant en outre au moins une portion de paroi latérale annulaire cylindrique (42) qui s'étend axialement depuis ladite face (47) de la plaque de support (40) et dans laquelle est formé un logement (58) de guidage dans lequel le bloc (60) est guidé en coulissement radial.

2. Moteur électrique selon la revendication 1, caractérisé en ce que le logement (58) est une ouverture débouchante permettant l'introduction radiale du bloc (60) .

3. Moteur électrique selon l'une des revendications 1 ou 2, caractérisé en ce que l'un au moins des blocs amortisseurs (60) est réalisé sous la forme d'une clavette de verrouillage montée coulissante sur la plaque de support (40), selon une direction radiale, entre une position de verrouillage dans laquelle la portion (36) du bord périphérique (34) de la plaque porte-charbons (18) est reçue dans une encoche (66) formée dans la face transversale d'extrémité de la clavette (60) tournée radialement vers l'intérieur, et une position de mise en place de la plaque porte-charbons (18).

4. Moteur électrique selon la revendication 3, caractérisé en ce que la clavette de verrouillage (60) est réalisée sous la forme d'un bloc en matériau amortisseur des vibrations dont ladite face transversale d'extrémité comporte une encoche (66) débouchante qui s'étend dans un plan parallèle au plan de la plaque de support (40) et dont la largeur est sensiblement égale à l'épaisseur de la plaque porte-charbons (18).

5. Moteur électrique selon la revendication 4, caractérisé en ce que le bloc comporte une face inférieure (62) qui coulisse sur ladite face (47) de la plaque de support (40) et une face supérieure (64) dont le bord transversal d'extrémité (67) qui délimite l'encoche (66) est situé radialement en retrait vers l'extérieur par rapport au bord transversal d'extrémité correspondant (68) de la face inférieure (62) du bloc.

6. Moteur électrique selon l'une des revendication 4 ou 5, caractérisé en ce que le bloc (60) comporte au moins une cloison (70) d'indexation angulaire qui s'étend à l'intérieur de l'encoche (66) et qui est reçue dans une fente radiale (38) formée dans ladite portion (36) du bord périphérique (34) de la plaque porte-charbons (18) lorsque la clavette (60) est dans sa position de verrouillage.

7. Moteur selon l'une quelconque des revendications 3 à 6, caractérisé en ce que chaque bloc amortisseur est réalisé sous la forme d'une clavette de verrouillage.

8. Moteur électrique selon l'une quelconque des revendications précédentes, caractérisé en ce que la structure de support (16) comporte deux blocs amortisseurs diamétralement opposés.

9. Moteur électrique selon l'une quelconque des revendications précédentes, caractérisé en ce que la plaque de support (40) comporte des éléments de raccordement électrique (48, 50) qui sont notamment reliés aux charbons (12) portés par la plaque porte-charbons (18).

10. Moteur électrique selon la revendication 9, caractérisé en ce que les éléments de raccordement électrique appartiennent à une structure métallique de raccordement fixée sur la plaque de support (40).

11. Moteur électrique selon la revendication 10, caractérisé en ce que la structure métallique de raccordement est fixée sur la face (46) de la plaque de support (40) opposée à celle (47) sur laquelle sont agencés les blocs amortisseurs (60).

## Patentansprüche

1. Elektromotor, insbesondere Gleichstrommotor, für eine Antriebseinheit zu einem Scheibenwischer für Kraftfahrzeuge, in der Ausführung mit einem allgemein zylindrischen Motorgehäuse, in dessen Innern ein Läufer drehend gelagert ist, dessen Welle durch eine Bürstenhalterplatte (18) hindurchgeht, deren Kohlebürsten jeweils mit einem an der Läuferwelle angebrachten Stromwender zusammenwirken, und in der Ausführung mit einem elektrischen Anschlußmodul, das eine Tragstruktur (16) für die Bürstenhalterplatte (18) umfaßt, auf der letztere unter Einfügung von Schwingungsdämpfervorrichtungen befestigt ist, **dadurch gekennzeichnet,** daß die Tragstruktur (16) eine Tragplatte (40) umfaßt, die auf einer Fläche (47) mit einer Mehrzahl von Dämpferblöcken (60) bestückt ist, die jeweils eine Ausklinkung (66) enthalten, in die ein Teilstück (36) der Umfangskante (34) der Bürstenhalterplatte (18) eingesetzt ist, wobei die Tragplatte (40) außerem wenigstens ein ringförmiges zylindrisches Seitenwandstück (42) umfaßt, das sich axial von der besagten Fläche (47) der Tragplatte (40) aus erstreckt und in das eine Führungsaufnahme (58) eingearbeitet ist, in welcher der Dämpferblock (60) radial verschiebbar geführt ist.

2. Elektromotor nach Anspruch 1, **dadurch gekennzeichnet,** daß die Aufnahme (58) eine durchgehende Öffnung ist, die das radiale Einsetzen des Blocks (60) ermöglicht.

3. Elektromotor nach einem der Ansprüche 1 oder 2, **dadurch gekennzeichnet,** daß wenigstens einer der Dämpferblöcke (60) in Form eines Verriegelungskeils ausgeführt ist, der auf der Tragplatte (40) entlang einer radialen Richtung verschiebbar zwischen einer Verriegelungsposition, in der das Teilstück (36) der Umfangskante (34) der Bürstenhalterplatte (18) in eine Ausklinkung (66) eingreift, die in die radial nach innen gerichtete endseitige Querfläche des Keils (60) eingearbeitet ist, und einer Position für das Einsetzen der Bürstenhalterplatte (18) gelagert ist.

4. Elektromotor nach Anspruch 3, **dadurch gekennzeichnet,** daß der Verriegelungskeil (60) in Form eines Blocks aus Schwingungsdämpfermaterial ausgeführt ist, dessen endseitige Querfläche eine durchgehende Ausklinkung (66) enthält, die sich in einer zur Ebene der Tragplatte (40) parallelen Ebene erstreckt und deren Breite in etwa gleich der Dicke der Bürstenhalterplatte (18) ist.

5. Elektromotor nach Anspruch 4, **dadurch gekennzeichnet,** daß der Block eine Unterseite (62), die auf der besagten Fläche (47) der Tragplatte (40) gleitend geführt ist, und eine Oberseite (64) umfaßt, deren endseitige Querkante (67), die die Ausklinkung (66) begrenzt, im Verhältnis zu der entsprechenden endseitigen Querkante (68) der Unterseite (62) des Blocks radial nach außen zurückversetzt ist.

6. Elektromotor nach einem der Ansprüche 4 oder 5, **dadurch gekennzeichnet,** daß der Block (60) wenigstens eine Winkelpositionierungstrennwand (70) umfaßt, die sich im Innern der Ausklinkung (66) erstreckt und die in einen radialen Schlitz (38) eingreift, der in das besagte Teilstück (36) der Umfangskante (34) der Bürstenhalterplatte (18) eingearbeitet ist, wenn sich der Keil (60) in seiner Verriegelungsposition befindet.

7. Elektromotor nach einem der Ansprüche 3 bis 6, **dadurch gekennzeichnet,** daß jeder Dämpferblock in Form eines Verriegelungskeils ausgeführt ist.

8. Elektromotor nach einem der vorangehenden Ansprüche, **dadurch gekennzeichnet,** daß die Tragstruktur (16) zwei diametral gegenüberliegende Dämpferblöcke umfaßt.

9. Elektromotor nach einem der vorangehenden Ansprüche, **dadurch gekennzeichnet,** daß die Tragplatte (40) elektrische Anschlußelemente (48, 50) umfaßt, die insbesondere mit den an der Bürstenhalterplatte (18) angebrachten Kohlebürsten (12) verbunden sind.

10. Elektromotor nach Anspruch 9, **dadurch gekennzeichnet,** daß die elektrischen Anschlußelemente zu einer aus Metall ausgeführten Anschlußstruktur gehören, die an der Tragplatte (16) befestigt ist.

11. Elektromotor nach Anspruch 10 , **dadurch gekennzeichnet,** daß die aus Metall ausgeführte Anschlußstruktur an der Fläche (46) der Tragplatte (40) befestigt ist, die der Fläche (47), an der die Dämpferblöcke (60) angeordnet sind, gegenüberliegt.

## Claims

1. An electric motor, especially a direct current motor, for a drive unit of a windshield wiper in a motor vehicle, of the type comprising a motor housing having a generally cylindrical shape inside which a rotor rotates, the shaft of which passes through a brush holder plate (18), each brush of which cooperates with a commutator borne by the rotor shaft, and of the type comprising a connection module comprising a support structure (16) for the brush holder plate (18), on which the latter is fixed with the interposition of vibration damping devices,
**characterised in that** the support structure (16) comprises a support plate (40), one face (47) of which is equipped with a plurality of damping blocks (60), each of which comprises a notch (66) in which is housed a portion (36) of the peripheral edge (34) of the brush holder plate (18), the support plate (40) also comprising at least one cylindrical annular lateral wall portion (42) which extends axially from the said face (47) of the support plate (40) and in which a guiding seat (58) is formed in which the block (60) is guided to slide radially.

2. An electric motor according to Claim 1,
**characterised in that** the seat (58) is an aperture enabling the radial introduction of the block (60).

3. An electric motor according to one of Claims 1 or 2,
**characterised in that** at least one of the damping blocks (60) is made in the form of a locking key slidably mounted on the support plate (40), in a radial direction, between a locking position in which the portion (36) of the peripheral edge (34) of the brush holder plate (18) is received in a notch (66) formed in the end transversal face of the key (60) turned radially inwards, and a positioning position of the brush holder plate (18).

4. An electric motor according to Claim 3,
**characterised in that** the locking key (60) is made in the form of a block made of vibration damping material, the said end transversal face of which comprises an opening notch (66) extending in a plane parallel to the plane of the support plate (40) and the width of which is substantially equal to the thickness of the brush holder plate (18).

5. An electric motor according to Claim 4,
**characterised in that** the block comprises a lower face (62) which slides on the said face (47) of the support plate (40) and an upper face (64), whose end transversal edge (67), which delimits the notch (66), is situated radially recessed towards the outside in relation to the corresponding end transversal edge (68) of the lower face (62) of the block.

6. An electric motor according to one of Claims 4 or 5,
**characterised in that** the block (60) comprises at least one angular indexing partition (70) which extends inside the notch (66) and which is received in a radial slot (38) formed in the said portion (36) of the peripheral edge (34) of the brush holder plate (18) when the key (60) is in its locking position.

7. A motor according to any one of Claims 3 to 6,
**characterised in that** each damping block is made in the form of a locking key.

8. An electric motor according to any one of the preceding Claims,
**characterised in that** the support structure (16) comprises two diametrally opposite damping blocks.

9. An electric motor according to any one of the preceding Claims,
**characterised in that** the support plate (40) comprises electric connection elements (48, 50) which are especially connected to the carbon brushes (12) borne by the brush holder plate (18).

10. An electric motor according to Claim 9,
**characterised in that** the electric connection elements belong to a metallic connecting structure fixed onto the support plate (40).

11. An electric motor according to Claim 10,
**characterised in that** the metallic connecting structure is fixed onto the face (46) of the support plate (40) opposite that (47) on which the damping blocks (60) are provided.
